# EUROPEAN PATENT APPLICATION

(11) **EP 1 413 363 A1**
(43) Date of publication of application: **28.04.2004**
(21) Application number: 03024241.6
(22) Date of filing: 22.10.2003
(51) Int. Cl.: B05C 5/00, A23L 3/365, A23B 4/07

(54) **Machine for defrosting deep-frozen food, in particular fish products**

(30) Priority: 23.10.2002 IT bo20020670
(71) Applicant: Forlani, Alberto, 44020 S. Giuseppe (Ferrara) (IT)
(72) Inventor: Forlani, Alberto, 44020 S. Giuseppe (Ferrara) (IT)
(74) Representative: Dall'Olio, Giancarlo

(57) **Abstract**

The proposed machine for defrosting deep-frozen food (2), in particular fish products, includes: one feeding tank (3), containing a heat exchanging fluid (9) and provided with a plurality of holes for generating by gravity a shower flow (9a) into an underlying work chamber (4); operative means (5) provided within said work chamber (4) and adapted for moving the above mentioned deep-frozen food products (2), so as to subject the latter to the said shower flow (9a); one collecting basin (6) located underneath said operative means (5) for collecting said heat exchanging fluid (9) outflowing from the work chamber (4); recirculation means (7) provided for conveying the said heat exchanging fluid (9) to said feeding tank (3); exchanger means (8) aimed at supplying heat to the above mentioned heat exchanging fluid (9) which outflows from said collecting basin (6).

## Description

The present invention relates to the technical field regarding the deep-freezing of food products, with particular reference to fish products.

In the specific case, the present invention relates to a machine for defrosting frozen and/or deep-frozen foodstuffs.

As known, deep-freezing concerns the methods and procedures that use cold for food substance preservation.

From the technological point of view, all foodstuffs can be deep-frozen for preservation, but the effects differ according to whether the cooling is aimed at reaching a temperature just a bit higher than the freezing point (refrigeration) or lower than it (freezing and deep-freezing processes).

Freezing is the particular food preservation procedure wherein, under the effect of the application of cold, water is almost completely in the form of ice and the temperatures reached are so low that they inhibit the action of all enzymes.

In the refrigeration process, on the other hand, water remains in liquid form and the temperatures reached do not completely interrupt the biochemical processes.

When cooling occurs slowly, quite large ice crystals form into the food, since the crystallisation seeds are not numerous. On the other hand, if cooling is fast, the ice crystals exhibit much smaller sizes.

A fine crystalline structure does not alter the tissues forming the foodstuffs, whereas the formation of large crystals damages the cellular walls, with consequent exudation of liquids and loss of the normal consistency during the subsequent defrosting.

To this purpose, in order to prevent the formation of very large ice crystals while defrosting, a fast freezing at temperatures of -40/-50 °C (deep-freezing) is recommended.

As in the freezing and/or deep-freezing process, in the reverse defrosting process special importance has the rate at which heat is imparted to the food substances, as it must be sufficiently high to avoid damaging the cellular walls of the same substances.

These problems, however, are especially felt in the deep-freezing of meat and fish, with special importance in the latter case.

At present, fish products are defrosted by plunging the frozen products, usually in parallelepipedal blocks, into basins filled with water, so as to improve the thermal exchange between the frozen foodstuff and the surrounding fluid for considerable time intervals, often for an entire night.

According to these methods, the defrosting continues until a thermal balance is achieved between the foodstuff and the water contained into the basins. In order to achieve optimum defrosting, water at ambient temperature is then poured into the basins until they overflow, so as to favour a water change.

This system, widely used, exhibits the significant disadvantage of not allowing a quick defrosting of fish products, thereby causing unavoidable widespread lesions of the cellular walls of the defrosted foodstuffs.

On top of this, there is a high waste of water required to feed the basins as well as the time required for an optimum defrosting of the fish products.

Further systems for defrosting fish products provide for a series of basins containing water, communicating with one another (for example at variable heights), wherein the frozen and/or deep-frozen fish products are arranged.

Water flows in a closed-circuit fashion between the communicating basins and a recirculation channelling provided with a hydraulic pump.

Downstream of the pump there is at least one heat exchanger that raises the temperature of the water flowing out of the basins almost to ambient temperature.

In this solution the use of water, that circulates between the basins and the channelling, pushed by the pump, is limited but the defrosting times are particularly high and the quality of the defrosted products is affected accordingly.

The object of the present invention is to overcome the problems outlined hereinabove, by proposing a machine for defrosting any kind of deep-frozen foodstuff, in particular fish products, ensuring a reduced waste of liquid for heat exchanging and ensuring at the same time a particularly short defrosting time.

A further object of the present invention is to propose a machine for defrosting deep-frozen foodstuff, which is capable of operating with defrosting times as short as to prevent any lesions of the cellular walls of the defrosted foodstuffs.

Yet another object of the invention is to propose a machine, which ensures high reliability and production rate in every operation condition, and which is capable of defrosting in the best way any kind of deep-frozen food.

The above mentioned objects are obtained in accordance with the contents of the claims.

The characteristics of the invention are set forth in the following description, where some preferred, but not exclusive embodiments of the invention are disclosed with reference to the accompanying drawings, in which:

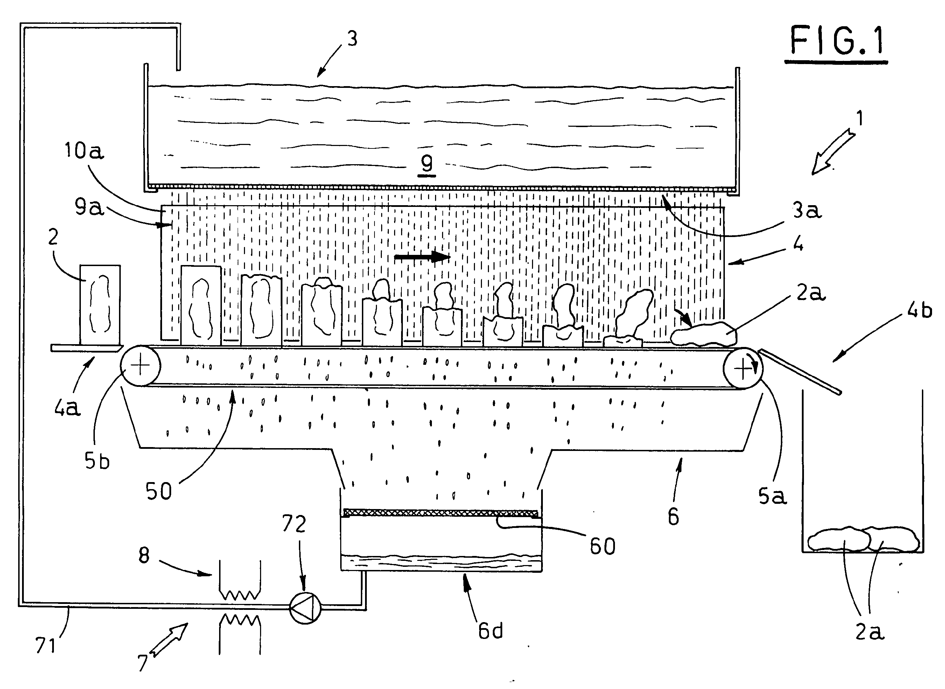

- Figure 1 shows schematically a side, in part sectional view of the defrosting machine, which is the subject of the present invention;
- Figure 2 shows schematically a front view of the machine shown in figure 1.

With reference to said drawings, the general reference numeral 1 indicates the proposed machine for defrosting deep-frozen food 2, in particular fish products.

Such machine 1 is provided with a feeding tank 3, containing a predetermined amount of water 9, provided at the bottom 3a with a plurality of holes adapted for generating by gravity a substantially even shower flow 9a of water 9 into an underlying work chamber 4.

By way of an example, bottom 3a of the feeding tank 3 consists of a plate, removably associated to the walls of the same feeding tank 3, provided with outflow holes on each corner of each square centimetre.

Conveying means 5 are provided into said work chamber 4 adapted for receiving in support the deep-frozen food products 2 at an inlet section 4a of said chamber 4, moving the latter within the same work chamber 4 so as to subject them to the shower flow 9a of water 9 for the full extension of the work chamber 4, then releasing defrosted food products 2a at an outlet section 4b of the same work chamber 4.

The conveying means 5 advantageously consist of a conveyor belt 50, winding ring-wise on corresponding pulleys, i.e. a driving pulley 5a and driven pulley 5b, provided with a plurality of holes adapted for allowing the outflow of water 9 from the work chamber 4 to a collecting basin 6 provided underneath the same.

Into the work chamber 4 there is provided a plurality of parallel partitions (10a, 10b, 10c, 10d), extending longitudinally relative to the same conveyor belt 50, flush with the same, capable of keeping adjacent deep-frozen food products 2 transversally separate, and thereby maximising the surface of the latter interested by the thermal exchange with the shower flow 9a of water 9.

Such parallel partitions (10a, 10b, 10c, 10d), along with the function of spacing adjacent deep-frozen food products 2, allow an optimum cross stabilisation of the same, allowing a side support to the same, especially in the proximity of the outlet section 4b of the work chamber 4.

Moreover, the machine 1 subject of the invention is provided with recirculation means 7 for conveying the water 9 present into the collecting basin 6 to the feeding tank 3, associated to suitable exchanger means 8 capable of providing heat to water 9 coming out of the same collecting basin 6.

In the proximity of bottom 6d of the collecting basin 6 there are provided filters 60 capable of filtering water 9 intended to come out of the same collecting basin 6 through the recirculation means 7.

The collecting basin 6, in the proximity of the conveyor belt 50, is provided with an opening 6a adapted for draining foamy residues associated to water 9 that outflows from the work chamber 4, after having impinged the deep-frozen food products 2 and transferred heat to them.

The recirculation means 7 preferably consist of a recirculation piping 71, which connects the collecting basin 6 to the feeding tank 3, on which there is provided a pump 72 capable of forcing the circulation of water 9 collected from the collecting basin 6, and heated by the exchanger means 8, to the same feeding tank 3.

A brief description of the operating principle of the machine object of the invention is provided hereinafter with reference to a generic operating step wherein a series of deep-frozen food products 2, suitably separated by the partitions (10a, 10b, 10c, 10d), are arranged onto the conveyor belt 50.

The shower flow 9a of water 9 coming from the holes obtained on bottom 3a of the feeding tank 3 dynamically and evenly impinges the underlying deep-frozen products 2 supported and moved by the conveyor belt 50.

In particular, thanks to the presence of the partitions (10a, 10b, 10c, 10d), the shower flow 9a fully and evenly impinges the top surface and the side surfaces of the deep-frozen products 2, thereby maximising the thermal exchange between the same and water 9.

The deep-frozen products 2 that go into the work chamber 4 at the inlet section 4a, therefore, are impinged for the entire extension of the same work chamber 4 by the shower flow 9a of water 9, so as to provide perfectly defrosted products 2a at the relevant outlet product outlet.

Such defrosted products 2a can therefore feed a baking line, or a packaging line where they are further conveyed to a distribution line, wherein they are defrosted or deep-frozen again.

Water 9 that in the work chamber 4 transfers heat to the deep-frozen products 2, therefore penetrates through the holes on the conveyor belt 50 and collects into basin 6 at a lower temperature than that it has at the feeding tank 3.

Due to the effect of the thermal work carried out on the outside surfaces (top and side) of the deep-frozen products 2, any foamy residues associated to water 9 come out of the collecting opening 6a, from which they are collected and disposed of.

In the proximity of bottom 6d of the collecting basin 6, filters 60 allow a satisfactory purification of water 9 intended to recirculate towards the feeding tank 3.

Water 9 collected from the collecting basin 6 by the action of pump 72 interacts with the exchanger means 8 thanks to which it raises its temperature, then it is conveyed again into the feeding tank 3, completing its closed-circuit cycle.

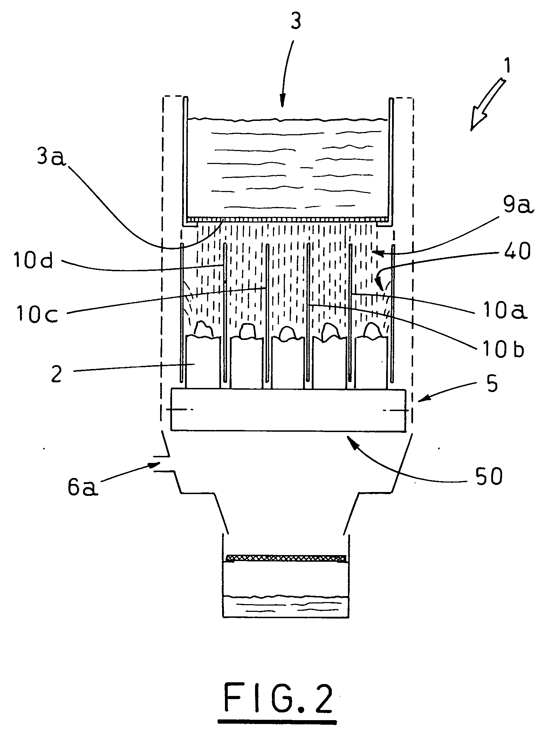

According to an interesting embodiment, shown by dashed lines in figure 2, the holes provided by the feeding tank 3 can also be realised at the internal side walls 40 of the work chamber 4, besides at the bottom 3a of the same.

By suitably adjusting the feeding speed of the conveyor belt 50, it is possible to proceed to the defrosting of any deep-frozen food product 2, ensuring an optimum quality of the defrosted product 2a coming out of the work chamber 4.

In some cases it is possible to provide for multiple defrosting cycles into the work chamber 4 for the same deep-frozen food products 2.

According to a further embodiment (not shown) it is possible to provide for choking means associated to the feeding tank 3, capable of adjusting the rate of the shower flow 9a of water 9 coming out of the holes provided on the same feeding tank 3.

In this case, the choking means can operate selectively on the holes present on bottom 3a of the feeding tank 3 and/or on holes optionally provided at the,internal side walls 40 of the work chamber 4.

The proposed machine for defrosting deep-frozen food products, in particular fish products, therefore ensures a limited water consumption compared to the prior art, allowing at the same time particularly reduced and limited defrosting times.

The possibility of adjusting the defrosting times at will by adjusting the flow rate of water coming from the feeding tank or adjusting the actuating speed of the conveyor belt, allows preventing and avoiding any lesion to the cellular walls of the food products processed.

This directly implies achieving the optimum defrosting of any type of deep-frozen food product, maintaining high reliability and productivity standards in any operating condition.

According to an interesting embodiment, it is possible to omit the conveying means and provide, purely by way of support, a shelf extending for the full longitudinal length of the work chamber and provided with at least one water drainage hole for water outflow towards the collecting basin.

In case of need, it is understood that it is possible to provide for multiple feeding tanks and multiple collecting basins, suitably connected to one another.

It must be also pointed out that the machine herein proposed for defrosting is simple in its construction and includes a limited number of components, which are easy to be found on the marketplace, all this bringing an advantage to the manufacturing costs, which are accordingly sufficiently reduced.

## Claims

1. Machine for defrosting deep-frozen food, in particular fish products, **characterized in that** in includes: at least one feeding tank (3), containing a heat exchanging fluid (9) and provided with a plurality of holes for generating by gravity a substantially even shower flow (9a) of said heat exchanging fluid (9) into an underlying work chamber (4); operative means (5) provided within said work chamber (4) and adapted for receiving in support the above mentioned deep-frozen food products (2), so as to subject the latter to the said shower flow (9a) of said heat exchanging fluid (9), which has the task of supplying heat to said deep-froze food (2) to defrost them; at least one collecting basin (6) located underneath said operative means (5) for collecting said heat exchanging fluid (9) outflowing from the work chamber (4), in which chamber the said fluid has supplied heat to the above mentioned deep-frozen products (2); recirculation means (7) provided for conveying the said heat exchanging fluid (9) from said collecting basin (6) to said feeding tank (3).

2. Machine according to claim 1, **characterized in that** it includes exchanger means (8) associated to the recirculation means (7) and aimed at supplying heat to the above mentioned heat exchanging fluid (9) which outflows from said collecting basin (6).

3. Machine according to claim 1 or 2, **characterized in that** it includes, within said work chamber (4), at least one partition (10a, 10b, 10c, 10d), extending longitudinally with reference to said operative means (5), said partition being capable of keeping adjacent deep-frozen food products (2), arranged onto the conveyor belt (50), transversely spaced out.

4. Machine according to claim 3, **characterized in that** it includes 'a series of partitions (10a, 10b, 10c, 10d), which are substantially parallel to one another.

5. Machine according to one of the claims from 1 to 4, **characterized in that** the above mentioned operative means (5) include conveying means (5) located within said work chamber (4) for receiving in support said deep-frozen products (2) thereon, and for moving said products along said work chamber (4).

6. Machine according to claim 5, **characterized in that** it includes, at the extremities of said work chamber (4), an inlet section (4a) in which said deep-froze products (2) are placed onto said conveying means (5), and an outlet section (4b), in which the conveying means release the defrosted products (2a); the said deep-frozen food products (2) being subjected to the shower flow (9a) of said heat exchanging fluid (9) for the full extension of the work chamber (4) comprised between the inlet section (4a) and the outlet section (4b).

7. Machine according to claim 5 or 6, **characterized in that** the above mentioned conveying means (5) include a conveyor belt (50) mounted ringwise on corresponding pulleys, i.e. a driving pulley (5a) and a driven pulley (5b), said conveyor belt being provided with a plurality of holes adapted for allowing the outflow of water (9) from the work chamber (4) to said collecting basin (6).

8. Machine according to any one of the previous claims, **characterized in that** it includes filtering means (60), located in the proximity of the bottom (6d) of the collecting basin (6), for filtering the said heat exchanging fluid (9) intended to come out of the same collecting basin (6) through the recirculation means (7).

9. Machine according to any one of the previous claims, **characterized in that** it includes an opening (6a) in said collecting basin (6) for draining foamy residues associated to said heat exchanging fluid (9) that outflows from the work chamber (4).

10. Machine according to any one of the previous claims, **characterized in that** the said recirculation means (7) consist of a recirculation piping (71), which connects the said collecting basin (6) to the said feeding tank (3), and co-operating with at least one pump (72) capable of forcing the circulation of said heat exchanging fluid (9) from the said collecting basin (6) to the same feeding tank (3).

11. Machine according to any one of the previous claims, **characterized in that** said plurality of holes made in the above mentioned feeding tank (3) is situated in the region of the bottom (3a) of the same feeding tank (3).

12. Machine according to claim 11, **characterized in that** the above mentioned plurality of holes made in the above mentioned feeding tank (3) is situated in the region of the bottom (3a) of the same feeding tank (3) as well as in the region of the inner lateral walls (40) of the above mentioned work chamber (4).

13. Machine according to any one of the previous claims, **characterized in that** choking means are associated to the feeding tank (3) and are capable of adjusting the rate of the shower flow (9a) of the heat exchanging fluid (9) coming out of the holes provided on the same feeding tank (3).

14. Machine according to any one of the previous claims, **characterized in that** the above mentioned heat exchanging fluid (9) is water.
